(19) Europäisches Patentamt
European Patent Office
Office européen des brevets

(11) **EP 4 006 840 A1**

(12) **EUROPÄISCHE PATENTANMELDUNG**

(43) Veröffentlichungstag:
**01.06.2022  Patentblatt 2022/22**

(21) Anmeldenummer: **20210306.5**

(22) Anmeldetag: **27.11.2020**

(51) Internationale Patentklassifikation (IPC):
**G06T 11/00** (2006.01)    **G06T 5/00** (2006.01)

(52) Gemeinsame Patentklassifikation (CPC):
**G06T 11/005; G06T 5/003;** G06T 2207/10116

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Healthcare GmbH**
**91052 Erlangen (DE)**

(72) Erfinder: **KALTSCHMIDT, Rainer**
**90542 Eckental Oberschöllenbach (DE)**

(54) **RESTAURATION EINES BRENNFLECKUNSCHARFEN RÖNTGENBILDES**

(57)    Die Erfindung betrifft ein Verfahren für ein Rekonstruieren eines Röntgenbildes eines Untersuchungsobjekts, eine zugehörige Röntgeneinrichtung und ein zugehöriges Computerprogrammprodukt.

Das erfindungsgemäße Verfahren für ein Rekonstruieren eines Röntgenbildes eines Untersuchungsobjekts, wobei das Untersuchungsobjekt zwischen einem Brennfleck auf einer Anode und einem Röntgendetektor angeordnet ist, weist folgende Schritte auf:
- Abrufen einer Brennfleck-Bildinformation, wobei die Brennfleck-Bildinformation eine zweidimensionale Intensitätsverteilung des Brennflecks auf der Anode enthält,
- Ermitteln als Skalierungsfaktor eines Quotienten von einem Brennfleck-Röntgendetektor-Abstand (FFA) über einem Abstand (FOA) zwischen dem Brennfleck und dem Untersuchungsobjekt,
- Berechnen einer geometrischen Brennfleckunschärfe (Ug) mittels einer Funktion, wofür die abgerufene Brennfleck-Bildinformation und der ermittelte Skalierungsfaktor Eingangsparameter sind und wobei eine Punktspreizfunktion ein Ausgangsparameter ist, und
- Rekonstruieren des Röntgenbildes unter Anwendung der Punktspreizfunktion auf Durchleuchtungsdaten, welche das Untersuchungsobjekt gemäß im Brennfleck generierter Röntgenstrahlung abbilden.

FIG 6

EP 4 006 840 A1

**Beschreibung**

Die Erfindung betrifft ein Verfahren für ein Rekonstruieren eines Röntgenbildes eines Untersuchungsobjekts, eine zugehörige Röntgeneinrichtung und ein zugehöriges Computerprogrammprodukt.

Eine Bildqualität eines Röntgenbildes hängt typischerweise von mehreren Faktoren ab. Ein typischer medizinischer Faktor ist beispielsweise die Physiologie des Patienten bzw. des Untersuchungsobjekts. Ein weiterer Faktor ist ein übliches Bildrauschen, welches durch die inhärent stochastische Natur der bildgebenden Röntgenstrahlung bedingt wird. Weiterhin ist herkömmlicherweise die Ortsfrequenzauflösung eines Röntgendetektors beschränkt und somit ein zusätzlicher Faktor. Zusätzlich kann eine Positionierung des Untersuchungsobjekts und/oder eine Geometrie der Röntgenstrahlung die Bildqualität negativ beeinflussen.

Die Geometrie der Röntgenstrahlung insbesondere im Zentralstrahl wird typischerweise von einer zweidimensionalen und somit nicht punktförmigen Intensitätsverteilung eines Brennflecks auf einer Anode vorgegeben. Diese zweidimensionale Intensitätsverteilung wird typischerweise Brennfleckunschärfe genannt. Insbesondere je geringer der Abstand zwischen dem Untersuchungsobjekt und dem Brennfleck ist und/oder je weiter das Untersuchungsobjekt von dem Röntgendetektor entfernt ist, desto geringer kann die Bildqualität aufgrund der Brennfleckunschärfe sein.

Ein idealer Brennfleck und seine Intensitätsverteilung ist in Theorie punktförmig. Allerdings erfordert eine endliche Energiedichte der Anode und/oder ein beschränkter Wärmetransport innerhalb der Anode eine zweidimensionale Ausdehnung. Grundsätzlich kann davon ausgegangen werden, dass die bisher verwendeten Materialkompositionen der Anode diesbezüglich bereits optimiert sind. Die zweidimensionale Intensitätsverteilung ist also erforderlich für die Gewährleistung einer für die Bildgebung ausreichend hohen emittierten Röntgenstrahlendosis und einem entsprechend akzeptablen Signal-RauschVerhältnis. Es ist bekannt, in Abhängigkeit der angeforderten Röntgenstrahlendosis die zweidimensionale Intensitätsverteilung in deren Ausdehnung zu verringern, um die Brennfleckunschärfe reduzieren zu können.

Der Erfindung liegt die Aufgabe zu Grunde, ein Verfahren für ein Rekonstruieren eines Röntgenbildes eines Untersuchungsobjekts, eine zugehörige Röntgeneinrichtung und ein zugehöriges Computerprogrammprodukt mit einer verringerten Brennfleckunschärfe anzugeben.

Die Aufgabe wird durch die Merkmale der unabhängigen Ansprüche gelöst. Vorteilhafte Ausgestaltungen sind in den Unteransprüchen beschrieben.

Das erfindungsgemäße Verfahren für ein Rekonstruieren eines Röntgenbildes eines Untersuchungsobjekts, wobei das Untersuchungsobjekt zwischen einem Brennfleck auf einer Anode und einem Röntgendetektor angeordnet ist, weist folgende Schritte auf:

- Abrufen einer Brennfleck-Bildinformation, wobei die Brennfleck-Bildinformation eine zweidimensionale Intensitätsverteilung des Brennflecks auf der Anode enthält,
- Ermitteln als Skalierungsfaktor eines Quotienten von einem Brennfleck-Röntgendetektor-Abstand über einem Abstand zwischen dem Brennfleck und dem Untersuchungsobjekt,
- Berechnen einer geometrischen Brennfleckunschärfe mittels einer Funktion, wofür die abgerufene Brennfleck-Bildinformation und der ermittelte Skalierungsfaktor Eingangsparameter sind und wobei eine Punktspreizfunktion ein Ausgangsparameter ist, und
- Rekonstruieren des Röntgenbildes unter Anwendung der Punktspreizfunktion auf Durchleuchtungsdaten, welche das Untersuchungsobjekt gemäß im Brennfleck generierter Röntgenstrahlung abbilden. Das Verfahren für das Rekonstruieren des Röntgenbildes des Untersuchungsobjekts ist insbesondere ein computer-implementiertes bzw. ein Recheneinheit-gestütztes Verfahren.

Eine erfindungsgemäße Röntgeneinrichtung weist

- die Anode mit dem Brennfleck zur Generierung von Röntgenstrahlung und
- den Röntgendetektor zur Erfassung von Durchleuchtungsdaten des Untersuchungsobjekts auf. Die Durchleuchtungsdaten zeigen insbesondere Absorptionsprofile der generierten Röntgenstrahlung in Abhängigkeit vom Untersuchungsobjekt.

Die Erfindung ist insbesondere desto vorteilhafter, je weiter das Untersuchungsobjekt vom Röntgendetektor entfernt ist und/oder je größer der Unterschied des Quotienten von dem Wert 1 ist. Der Quotient ist üblicherweise größer oder gleich 1. Beispielsweise sind also die Anode mit dem Brennfleck, der Röntgendetektor und das Untersuchungsobjekt derart angeordnet, dass der Abstand zwischen dem Brennfleck und dem Untersuchungsobjekt weniger als oder maximal bis zu 99% des Brennfleck-Röntgendetektor-Abstands beträgt.

Die Erfindung bietet insbesondere folgende Vorteile:

Vorzugsweise kann die für eine Bildgebung erforderliche Röntgenstrahlendosis unabhängig von der zu erwartenden Brennfleckunschärfe gewählt werden, weil die in die Durchleuchtungsdaten hineingefaltete Brennfleckunschärfe erfindungsgemäß ausgeglichen werden kann. Das Ausgleichen der Brennfleckunschärfe umfasst insbesondere das Verringern der in die Durchleuchtungsdaten hineingefalteten Brennfleckunschärfe. Somit ist eine größere zweidimensionale Intensitätsverteilung des Brennflecks und eine entsprechend höhere Röntgenstrahlendosis möglich, ohne die Bildqualität dabei zu beeinträchtigen oder zu verschlechtern. Weiterhin ist vorteilhaft, dass die Brennfleckunschärfe ausgehend vom ursächlichen Brennfleck und seiner zweidimensionalen Intensitätsverteilung ausgeglichen wird. Somit ist das erfindungsgemäße Vorgehen robust und auf verschiedene Anodenarten mit unterschiedlichen Anodenwinkeln aufweisend verschiedenartige Brennflecke anwendbar.

Vorteilhafterweise wird eine Gesamtunschärfe bei der Bildgebung mit Röntgenstrahlung verringert. Die Gesamtunschärfe ergibt sich insbesondere aus einer geometrischen Addition einer vom Untersuchungsobjekt abhängigen Bewegungsunschärfe, einer Unschärfe des Röntgendetektors aufgrund der endlichen Ortsfrequenzauflösung und eben der Brennfleckunschärfe. Insbesondere wird ermöglicht, dass durch den Ausgleich der Brennfleckunschärfe eine Röntgenstrahlendosis weiterhin erhöht werden kann aufgrund der größeren zweidimensionalen Intensitätsverteilung, so dass zusätzlich das Signal-RauschVerhältnis vorteilhafterweise sich bessert. Daraus folgt, dass der Ausgleich der Brennfleckunschärfe auch den Einfluss des Rauschens verringert.

Ein weiterer Vorteil der erhöhten Röntgenstrahlendosis ist eine Verkürzung der Röntgenstrahlzeit. Neben diesem grundsätzlichen Zeitvorteil beispielsweise für das Untersuchungsobjekt, insbesondere den Patienten, ist weiterhin die Reduktion der Gesamtunschärfe dadurch vorteilhaft, dass insbesondere die Bewegungsunschärfe desto geringer ist, je kürzer die Röntgenstrahlzeit ist. Die Röntgenstrahlzeit kann insbesondere desto kürzer sein, je stärker und/oder größer die zweidimensionale Intensitätsverteilung ist.

Die Röntgeneinrichtung ist insbesondere ein konventionelles Röntgensystem oder ein C-Bogen-Angiographie-System. Üblicherweise rotiert der Röntgendetektor nicht um eine Längsachse des Patienten. Der Röntgendetektor ist beispielsweise in eine Patientenlagerungsvorrichtung integriert oder unterhalb der Patientenlagerungsvorrichtung angeordnet. Insbesondere kann die Röntgeneinrichtung einen Röntgenstrahler umfassen, welcher typischerweise gegenüber vom Röntgendetektor angeordnet ist. Der Röntgenstrahler kann insbesondere ein Stehanoden-, Drehanoden- oder Drehkolben-Röntgenstrahler sein. Der Emitter kann insbesondere ein thermionischer Emitter mit einer Heizwendel und/oder einem Flachemitter oder ein kalter Emitter mit zumindest einer Silizium- oder Kohlenstoff-Feldeffekt-Emitternadel sein. Die vom Elektronenemitter emittierten Elektronen werden typischerweise mittels einer Beschleunigungsspannungsquelle auf bis zu Energien von 150 keV in Richtung des Brennflecks auf der Anode beschleunigt.

Je nach Ausführung des Brennflecks kann insbesondere ein Sequenzparameter eines Untersuchungsprotokolls für die bildgebenden Untersuchung variieren. Alternativ oder zusätzlich kann ein Sequenzparameter des Untersuchungsprotokolls den Brennfleck-Röntgendetektor-Abstand und/oder den Abstand zwischen dem Brennfleck und dem Untersuchungsobjekt beschreiben. Das Untersuchungsprotokoll umfasst zeitlich betrachtet insbesondere einen Zeitraum, in welchem das Untersuchungsobjekt, insbesondere der Patient, auf der Patientenlagerungsvorrichtung für die bildgebende Untersuchung gelagert ist oder zwischen dem Röntgendetektor und der Anode für die bildgebende Untersuchung positioniert ist und/oder zumindest das Erfassen der Durchleuchtungsdaten.

Die Brennfleck-Bildinformation kann in Form einer digitalen oder digitalisierten Photographie oder einer anderen photometrischen Ortsraum-Abbildung des Brennflecks vorliegen. Die Brennfleck-Bildinformation kann insbesondere in einem bildbasierten Format wie z. B. DICOM, JPEG, PNG, etc. oder in einem matrixbasierten Datenformat wie z.B. MAT, DAT, etc. vorliegen. Die zweidimensionale Intensitätsverteilung wird insbesondere mittels einer Gammakamera und/oder Fokuskamera erfasst. Die Brennfleck-Bildinformation ist typischerweise dadurch normiert, dass die zweidimensionale Intensitätsverteilung aus einem vorgegebenen Abstand von dem Brennfleck gemessen oder erfasst wird.

Die zweidimensionale Intensitätsverteilung ist insbesondere durch eine Kontur und die Intensitätsbeträge der Intensitätsverteilung charakterisiert. Die Kontur der zweidimensionalen Intensitätsverteilung ist typischerweise viereckig, insbesondere ein Parallelogramm oder rautenförmig. Grundsätzlich kann die Kontur je nach Ausführung des Brennflecks im Wesentlichen kreisförmig sein oder eine weitere beliebige geometrische ebene Form wie ein asymmetrisches oder symmetrisches Vieleck aufweisen. Die Brennfleck-Bildinformation kann insbesondere die Kontur exakt und/oder absolut, beispielsweise in mm wiedergeben. Beispielsweise kann eine Längenausdehnung der Kontur bis zu 10 mm, beispielsweise 1,85 oder 1,3 mm, und eine Breitenausdehnung der Kontur bis zu 5 mm, beispielsweise 1,25 oder 0,85 mm betragen. Aufgrund des erfindungsgemäßen Ausgleichs der Brennfleckunschärfe sind vorteilhafterweise auch größere Konturen wie zuvor dargestellt denkbar.

Innerhalb der Kontur sind die Intensitätsbeträge typischerweise heterogen und/oder ortsabhängig. Die ortsabhängigen Intensitätsbeträge der zweidimensionalen Intensitätsverteilung korrelieren insbesondere mit einer Anzahl an dem jeweiligen Ort eintreffenden Elektronen. Die zweidimensionale Intensitätsverteilung wird regelmäßig Fokus genannt.

Die Brennfleck-Bildinformation kann insbesondere aus einer Brennfleck-Speichereinheit abgerufen werden. Die Brennfleck-Bildinformation wird insbesondere von der Recheneinheit abgerufen. Die Brennfleck-Speichereinheit mit der Brennfleck-Bildinformation kann beispielsweise von einem Hersteller des Röntgenstrahlers bereitgestellt werden. Die Brennfleck-Speichereinheit kann Teil des Röntgenstrahlers oder der Röntgeneinrichtung sein. Alternativ oder zusätzlich kann die Brennfleck-Speichereinheit ein Arbeitsspeicher des Röntgenstrahlers oder der Röntgeneinrichtung sein, in welcher die Brennfleck-Bildinformation zwischengespeichert werden kann.

Es ist denkbar, dass in der Brennfleck-Speichereinheit eine Vielzahl an Brennfleck-Bildinformationen vorliegt. Die Vielzahl an Brennfleck-Bildinformationen kann typischerweise unterteilt werden in verschiedene Brennflecke der Anode und/oder in unterschiedliche Brennflecke einer anderen Anode.

Das Ermitteln des Skalierungsfaktor kann ein Erfassen des Brennfleck-Röntgendetektor-Abstands und/oder des Abstands zwischen dem Brennfleck und dem Untersuchungsobjekt insbesondere mittels einer Kamera, einer Radareinheit und/oder eines Abstandssensors umfassen. Das Erfassen der Abstände kann insbesondere gemäß Abstanderfassungs-Programmcodemitteln in der Recheneinheit erfolgen. Der Skalierungsfaktor wird insbesondere in der Recheneinheit ermittelt.

Der Quotient des Brennfleck-Röntgendetektor-Abstands über dem Abstand zwischen dem Brennfleck und dem Untersuchungsobjekt entspricht insbesondere dem Skalierungsfaktor. Das Ermitteln des Skalierungsfaktors umfasst insbesondere das Berechnen des Quotienten des Brennfleck-Röntgendetektor-Abstands über dem Abstand zwischen dem Brennfleck und dem Untersuchungsobjekt insbesondere in der Recheneinheit. Der Skalierungsfaktor ist insbesondere ein Vergrößerungsfaktor. Der Brennfleck-Röntgendetektor-Abstand ist der Abstand zwischen dem Brennfleck und dem Röntgendetektor. Der Abstand zwischen dem Brennfleck und dem Untersuchungsobjekt hängt typischerweise von einer Ausrichtung und/oder Größe des Untersuchungsobjekts ab. Der Abstand zwischen dem Brennfleck und dem Untersuchungsobjekt kann definiert sein als Abstand zwischen dem Brennfleck und beispielsweise einer Oberfläche, einer Oberseite, eines Mittelpunkts, eines gewichteten Schwerpunkts und/oder einer Unterseite des Untersuchungsobjekts. Der Skalierungsfaktor kann insbesondere mittels einem Korrekturterm gleich minus 1 modifiziert werden, um dem idealisierten Fall Rechnung zu tragen, wenn der Quotient 1 ist und daher keine Brennfleckunschärfe entstehen kann. Der Skalierungsfaktor ergibt sich also insbesondere wie folgt aus dem Quotienten und dem Korrekturterm:

$$Skalierungsfaktor = \left(\frac{FFA}{FOA} - 1\right)$$

Die geometrische Brennfleckunschärfe Ug lässt sich insbesondere mittels einer solchen Funktion, welche eine Multiplikation der abgerufenen Brennfleck-Bildinformation If und des ermittelten Skalierungsfaktors vorsieht, berechnen:

$$Ug = If \cdot \left(\frac{FFA}{FOA} - 1\right)$$

Diese Multiplikation kann bevorzugt in einem Ortsraum, alternativ im Frequenzraum erfolgen. Die Funktion kann weiterhin vorsehen, dass ein Ortsraum-Ergebnis der Multiplikation in den Frequenzraum beispielsweise mittels der FourierTransformation transformiert wird, so dass die Punktspreizfunktion der Ausgangsparameter der Funktion ist. Die Punktspreizfunktion ist üblicherweise im Frequenzraum dargestellt. Die Punktspreizfunktion repräsentiert insbesondere die geometrische Brennfleckunschärfe.

Eine die Bildqualität reduzierende Brennfleckunschärfe wird üblicherweise vor dem Röntgendetektor durch das Untersuchungsobjekt in die Durchleuchtungsdaten hineingefaltet. Physikalisch betrachtet findet also eine (dem Halbschattenwurf des sichtbaren Lichts ähnliche) Vermischung der bildgebenden Röntgenstrahlung statt, welche insbesondere am Schwächungskoeffizienten des zu untersuchenden Materials des Untersuchungsobjekts moduliert wird. Im Ergebnis ist die Röntgenstrahlung entsprechend verschränkt vor dem Eintreffen auf dem Röntgendetektor. Somit kann die Brennfleckunschärfe typischerweise nicht durch eine Erhöhung der Ortsfrequenzauflösung des Röntgendetektors ausgeglichen werden.

Erfindungsgemäß beruht der Ausgleich der Brennfleckunschärfe auf der Annahme, dass eine Röntgeneinrichtung mit dem Brennfleck und dem Röntgendetektor ein lineares und hinreichend verschiebungsinvariantes System ist. Beispielsweise gilt der Röntgenstrahler der Röntgeneinrichtung, welcher unter anderem die Anode umfasst, im Sinne der IEC 60601 als hinreichend linear, woraus folgt, dass 0 mA Röhrenstrom 0 Röntgenstrahlendosis und/oder doppelter Röhrenstrom doppelte Röntgenstrahlendosis ergibt.

Mathematisch gesprochen erfolgt also durch die zweidimensionale Intensitätsverteilung eine Faltung, welche die Brennfleckunschärfe erzeugt. Vorteilhafterweise kann die Verschränkung der Röntgenstrahlung mathematisch durch eine Umkehroperation, also eine Restauration oder Dekonvolution, aufgehoben werden. Dafür ist erfindungsgemäß die vorteilhafte Berücksichtigung der Brennfleck-Bildinformation und des Skalierungsfaktors vorgesehen. Also entsprechen die Durchleuchtungsdaten regelmäßig dem Ergebnis der Faltung der Fouriertransformierten des Untersuchungsobjekts und der Punktspreizfunktion, welche die Brennfleckunschärfe überträgt.

Die Anwendung der Punktspreizfunktion auf die Durchleuchtungsdaten umfasst insbesondere die inverse Fouriertransformation zur Dekonvolution der Durchleuchtungsdaten, in welche die Brennfleckunschärfe hineingefaltet ist. Das rekonstruierte Röntgenbild ist also vorteilhafterweise unabhängig von der hineingefalteten Brennfleckunschärfe, weil die Brennfleckunschärfe mittels der Korrektur mit der inversen Punktspreizfunktion verringert oder ausgeglichen werden kann. Besonders vorteilhafterweise wird die Punktspreizfunktion auf die Durchleuchtungsdaten angewendet, bevor ein Ortsfrequenzfilter zur Kantenanhebung und/oder eine Punkttransformation, insbesondere zur Harmonisierung bzw. Fensterung, angewendet wird. Das Rekonstruieren des Röntgenbildes unter Anwendung der Punktspreizfunktion auf die Durchleuchtungsdaten erfolgt insbesondere in der Recheneinheit.

Eine Ausführungsform sieht vor, dass die Durchleuchtungsdaten sowie der Abstand zwischen dem Brennfleck und dem Untersuchungsobjekt und/oder der Brennfleck-Röntgendetektor-Abstand im Rahmen einer bildgebenden Untersuchung des Untersuchungsobjekts erfasst werden. Im Rahmen bedeutet insbesondere, dass die bildgebende Untersuchung insbesondere das Erfassen der Durchleuchtungsdaten und des Brennfleck-Röntgendetektor-Abstands und/oder des Abstands zwischen dem Brennfleck und dem Untersuchungsobjekt umfasst. Die bildgebende Untersuchung läuft insbesondere gemäß dem Untersuchungsprotokoll ab. Diese Ausführungsform ist insbesondere vorteilhaft, weil dadurch der Abstand zwischen dem Brennfleck und dem Untersuchungsobjekt und/oder der Brennfleck-Röntgendetektor-Abstand individuell für das Untersuchungsobjekt und/oder typischerweise exakter ermittelt wird. Dadurch sollte die hineingefaltete Brennfleckunschärfe weiter reduziert werden können.

Eine zur vorherigen Ausführungsform alternative Ausführungsform sieht vor, dass der Brennfleck-Röntgendetektor-Abstand und/oder der Abstand zwischen dem Brennfleck und dem Untersuchungsobjekt automatisch in Abhängigkeit eines die im Brennfleck generierte Röntgenstrahlung vorgebenden Sequenzparameters abgerufen wird. Der Brennfleck-Röntgendetektor-Abstand kann beispielsweise dadurch ermittelt werden, dass die Röntgeneinrichtung die Anordnung des Röntgendetektors relativ zum Brennfleck kennt und somit deren Abstand für ein Abrufen bereitstellen kann. In diesem Fall kann die Recheneinheit auf den bereits bekannten Brennfleck-Röntgendetektor-Abstand zugreifen. Der Abstand zwischen dem Brennfleck und dem Untersuchungsobjekt, insbesondere die Ausrichtung und/oder die Größe des Untersuchungsobjekts, kann beispielsweise gemäß dem Sequenzparameter des Untersuchungsprotokolls ermittelt werden. Die Durchleuchtungsdaten können insbesondere während des Untersuchungsprotokolls mit der im Brennfleck gemäß dem Sequenzparameter generierten Röntgenstrahlung erfasst werden und/oder erfasst worden sein. Da typischerweise die Röntgeneinrichtung die Position des Röntgenstrahlers und/oder der Anode mit dem Brennfleck kennt, kann vorteilhafterweise die Recheneinheit den Abstand zwischen dem Brennfleck und dem Untersuchungsobjekt gemäß dem Sequenzparameter ermitteln und/oder abrufen. In diesem Fall kann das Ermitteln insbesondere ein Abschätzen eines mittleren Abstands als erste Näherung des Abstands zwischen dem Brennfleck und dem Untersuchungsobjekt umfassen.

Eine weitere alternative Ausführungsform sieht vor, dass der Brennfleck-Röntgendetektor-Abstand und/oder der Abstand zwischen dem Brennfleck und dem Untersuchungsobjekt automatisch durch Auswertung der Durchleuchtungsdaten ermittelt wird. In anderen Worten werden vorteilhafterweise die Durchleuchtungsdaten dazu verwendet, den Brennfleck-Röntgendetektor-Abstand und/oder den Abstand zwischen dem Brennfleck und dem Untersuchungsobjekt zu ermitteln. Diese Ausführungsform ist insbesondere vorteilhaft, weil die Recheneinheit dazu insbesondere gemäß weiteren Abstanderfassungs-Programmcodemitteln konfiguriert sein kann, die Durchleuchtungsdaten oder ein weiteres Röntgenbild basierend auf den Durchleuchtungsdaten derart auszuwerten, dass der Brennfleck-Röntgendetektor-Abstand und/oder der Abstand zwischen dem Brennfleck und dem Untersuchungsobjekt bildgestützt gemessen und somit bildgestützt ermittelt wird. Bei dieser Ausführungsform entfällt vorzugsweise eine Verwendung einer Kamera, welche den Brennfleck relativ zum Untersuchungsobjekt und/oder relativ zum Röntgendetektor erfasst.

Eine Ausführungsform sieht vor, dass die Durchleuchtungsdaten sowie die zweidimensionale Intensitätsverteilung im Rahmen einer bildgebenden Untersuchung des Untersuchungsobjekts erfasst werden. Die Ausführungsform sieht als Teil des Untersuchungsprotokolls vorteilhafterweise das Erfassen einer individuellen zweidimensionalen Intensitätsverteilung vor, so dass die hineingefaltete Brennfleckunschärfe verringert werden kann, weil mehr Informationen über die tatsächliche Brennfleck-Ausgestaltung vorliegen und berücksichtigt werden können. Das Erfassen der individuellen zweidimensionalen Intensitätsverteilung kann insbesondere vor oder nach, bevorzugt während der Generierung der Durchleuchtungsdaten erfolgen. Letztere Variante bietet den Vorteil, dass die Röntgenstrahlendosis nicht erhöht wird, denn die Gammakamera erfasst vorteilhafterweise während der Generierung der Durchleuchtungsdaten den Brennfleck der die Durchleuchtungsdaten verursachenden Röntgenstrahlung und somit die zweidimensionale Intensitätsverteilung, welche dann für das Abrufen der Brennfleck-Bildinformation bereitgestellt werden kann. Das Erfassen der zweidimensionalen Intensitätsverteilung kann insbesondere ein Anwenden eines Schwellwerts und/oder Region-Growing-Algorithmus und/oder eines Brennfleck-Modells in der Recheneinheit umfassen. Diese Ausführungsform kann insbesondere derart kombiniert werden, dass die Durchleuchtungsdaten sowie die zweidimensionale Intensitätsverteilung sowie der Abstand zwischen dem Brennfleck und dem Untersuchungsobjekt und/oder der Brennfleck-Röntgendetektor-Abstand im Rahmen der bildgebenden Untersuchung des Untersuchungsobjekts erfasst werden.

Eine Ausführungsform sieht vor, dass die erfasste zweidimensionale Intensitätsverteilung mit einer Referenz-Intensitätsverteilung verglichen wird und dass in Abhängigkeit einer Abweichung der erfassten zweidimensionalen Intensitätsverteilung von der Referenz-Intensitätsverteilung ein Warnsignal bereitgestellt wird. Das Warnsignal kann insbesondere optisch und/oder akustisch sein. Die Abweichung beträgt idealerweise null, insbesondere wenn die erfasste zweidimensionale Intensitätsverteilung mit der Referenz-Intensitätsverteilung übereinstimmt. Dies kann insbesondere der Fall sein, wenn die erfasste zweidimensionale Intensitätsverteilung gemäß demjenigen Sequenzparameter erzeugt wird, welcher ebenso der Referenz-Intensitätsverteilung zugeordnet ist. Vorteilhafterweise ist also eine Verlaufskontrolle und/oder eine Plausibilitätscheck ermöglicht. Die Referenz-Intensitätsverteilung kann insbesondere in der Speichereinheit, beispielsweise in der Brennfleck-Speichereinheit abgespeichert sein. Das Warnsignal wird insbesondere von der Recheneinheit gemäß Vergleichsoperationen-Programmcodemitteln ausgelöst und/oder von einem Warnsignalgeber ausgegeben. Das Warnsignal wird insbesondere bereitgestellt, wenn die Abweichung einen Schwellwert über- oder unterschreitet.

Eine zur vorherigen Ausführungsform mit der individuellen zweidimensionalen Intensitätsverteilung alternative Ausführungsform sieht vor, dass die Brennfleck-Bildinformation automatisch in Abhängigkeit eines die im Brennfleck generierte Röntgenstrahlung vorgebenden Sequenzparameters abgerufen wird. Beispielsweise kann die Brennfleck-Bildinformation abgerufen werden, wenn der Sequenzparameter die zweidimensionale Intensitätsverteilung des Brennflecks derart vorgibt, dass gemäß der in dem Brennfleck generierten Röntgenstrahlung die Durchleuchtungsdaten erfasst werden können. Insbesondere die Recheneinheit kann die Brennfleck-Bildinformation automatisch abrufen. Typischerweise unterscheiden sich Sequenzparameter je nach vorgegebener Kontur und/oder den vorgegebenen Intensitätsbeträgen der zweidimensionalen Intensitätsverteilung. Die Brennfleck-Bildinformation kann dem Brennfleck auf der Anode durch eine Abbildung vor der bildgebenden Untersuchung des Untersuchungsobjekts direkt oder durch einen nachträglichen Vergleich indirekt zugeordnet sein. Beim nachträglichen Vergleich kann beispielsweise eine Zuordnung aus der Vielzahl der Brennfleckinformationen aufgrund einer Ermittlung einer Brennfleck-Ähnlichkeit in der Recheneinheit erfolgen. Diese Ausführungsform ist insbesondere vorteilhaft, weil dadurch ein Untersuchungsprotokoll ohne das individuelle Erfassen der zweidimensionalen Intensitätsverteilung ablaufen kann, wodurch eine Untersuchungsdauer verkürzt wird.

Eine Ausführungsform sieht vor, dass das Röntgenbild des Untersuchungsobjekts auf einer Anzeigeeinheit und/oder in einer Speichereinheit bereitgestellt wird. Die Anzeigeeinheit kann insbesondere Teil der Röntgeneinrichtung sein und/oder von einem Nutzer der Röntgeneinrichtung, beispielsweise einem Arzt dazu verwendet werden, um das Röntgenbild ohne Brennfleckunschärfe wahrzunehmen. Das Bereitstellen des Röntgenbilds umfasst insbesondere also das Anzeigen und/oder das Abspeichern und/oder Übertragen von der Recheneinheit.

Das Computerprogrammprodukt kann ein Computerprogramm sein oder ein Computerprogramm umfassen. Das Computerprogrammprodukt weist insbesondere die Programmcodemittel auf, welche die erfindungsgemäßen Verfahrensschritte abbilden. Dadurch kann das erfindungsgemäße Verfahren definiert und wiederholbar ausgeführt sowie eine Kontrolle über eine Weitergabe des erfindungsgemäßen Verfahrens ausgeübt werden. Das Computerprogrammprodukt ist vorzugsweise derart konfiguriert, dass die Recheneinheit mittels des Computerprogrammprodukts die erfindungsgemäßen Verfahrensschritte ausführen kann. Die Programmcodemittel können insbesondere in einen Speicher der Recheneinheit geladen und typischerweise mittels eines Prozessors der Recheneinheit mit Zugriff auf den Speicher ausgeführt werden. Wenn das Computerprogrammprodukt, insbesondere die Programmcodemittel, in der Recheneinheit ausgeführt wird, können typischerweise alle erfindungsgemäßen Ausführungsformen des beschriebenen Verfahrens durchgeführt werden. Das Computerprogrammprodukt ist beispielsweise auf einem physischen, computerlesbaren Medium gespeichert und/oder digital als Datenpaket in einem Computernetzwerk hinterlegt. Das Computerprogrammprodukt kann das physische, computerlesbare Medium und/oder das Datenpaket in dem Computernetzwerk darstellen. So kann die Erfindung auch von dem physischen, computerlesbaren Medium und/oder dem Datenpaket in dem Computernetzwerk ausgehen. Das physische, computerlesbare Medium ist üblicherweise unmittelbar mit der Recheneinheit verbindbar, beispielsweise indem das physische, computerlesbare Medium in ein DVD-Laufwerk eingelegt oder in einen USB-Port gesteckt wird, wodurch die Recheneinheit auf das physische, computerlesbare Medium insbesondere lesend zugreifen kann. Das Datenpaket kann vorzugsweise aus dem Computernetzwerk abgerufen werden. Das Computernetzwerk kann die Recheneinheit aufweisen oder mittels einer Wide-Area-Network- (WAN) bzw. einer (Wireless-)Local-Area-Network-Verbindung (WLAN oder LAN) mit der Recheneinheit mittelbar verbunden sein. Beispielsweise kann das Computerprogrammprodukt digital auf einem Cloud-Server an einem Speicherort des Computernetzwerks hinterlegt sein, mittels des WAN über das Internet und/oder mittels des WLAN bzw. LAN auf die Recheneinheit insbesondere durch das Aufrufen eines Downloadlinks, welcher zu dem Speicherort des Computerprogrammprodukts verweist, übertragen werden.

Bei der Beschreibung der Vorrichtung erwähnte Merkmale, Vorteile oder alternative Ausführungsformen sind ebenso auf das Verfahren zu übertragen und umgekehrt. Mit anderen Worten können Ansprüche auf das Verfahren mit Merkmalen der Vorrichtung weitergebildet sein und umgekehrt. Insbesondere kann die erfindungsgemäße Vorrichtung in dem Verfahren verwendet werden.

Im Folgenden wird die Erfindung anhand der in den Figuren dargestellten Ausführungsbeispiele näher beschrieben und erläutert. Grundsätzlich werden in der folgenden Figurenbeschreibung im Wesentlichen gleich bleibende Strukturen und Einheiten mit demselben Bezugszeichen wie beim erstmaligen Auftreten der jeweiligen Struktur oder Einheit benannt.

Es zeigen:

Fig. 1 ein Verfahren für ein Rekonstruieren eines Röntgenbildes eines Untersuchungsobjekts,

Fig. 2 bis 4 drei alternative Weiterbildungen des Verfahrens,

Fig. 5 das Verfahren in einem weiteren Ausführungsbeispiel,

Fig. 6 eine zugehörige Röntgeneinrichtung,

Fig. 7 eine Vielzahl an Konturen und

Fig. 8 verschiedene Brennflecke.

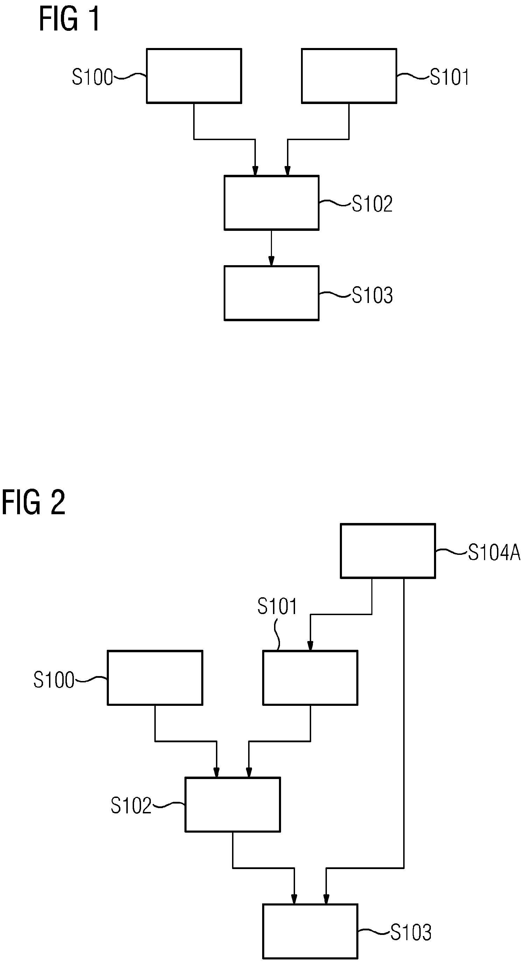

Fig. 1 zeigt ein Verfahren für ein Rekonstruieren eines Röntgenbildes eines Untersuchungsobjekts, wobei das Untersuchungsobjekt zwischen einem Brennfleck auf einer Anode und einem Röntgendetektor angeordnet ist, in einem Flussdiagramm.

Verfahrensschritt S100 kennzeichnet ein Abrufen einer Brennfleck-Bildinformation, wobei die Brennfleck-Bildinformation eine zweidimensionale Intensitätsverteilung If des Brennflecks auf der Anode enthält.

Verfahrensschritt S101 kennzeichnet ein Ermitteln als Skalierungsfaktor eines Quotienten von einem Brennfleck-Röntgendetektor-Abstand FFA über einem Abstand FOA zwischen dem Brennfleck und dem Untersuchungsobjekt.

Verfahrensschritt S102 kennzeichnet ein Berechnen einer geometrischen Brennfleckunschärfe Ug mittels einer Funktion, wofür die abgerufene Brennfleck-Bildinformation und der ermittelte Skalierungsfaktor Eingangsparameter sind und wobei eine Punktspreizfunktion ein Ausgangsparameter ist.

Verfahrensschritt S103 kennzeichnet ein Rekonstruieren des Röntgenbildes unter Anwendung der Punktspreizfunktion auf Durchleuchtungsdaten, welche das Untersuchungsobjekt gemäß im Brennfleck generierter Röntgenstrahlung abbilden.

Grundsätzlich ist denkbar, dass das rekonstruierte Röntgenbild des Untersuchungsobjekts auf einer Anzeigeeinheit und/oder in einer Speichereinheit bereitgestellt wird.

Fig. 2 zeigt eine erste Weiterbildung des Verfahrens gemäß Fig. 1 in einem Flussdiagramm. Zusätzlich zu den Verfahrensschritten S100 bis S103 kennzeichnet Verfahrensschritt S104A, dass die Durchleuchtungsdaten sowie der Abstand zwischen dem Brennfleck und dem Untersuchungsobjekt und/oder der Brennfleck-Röntgendetektor-Abstand im Rahmen einer bildgebenden Untersuchung des Untersuchungsobjekts erfasst werden.

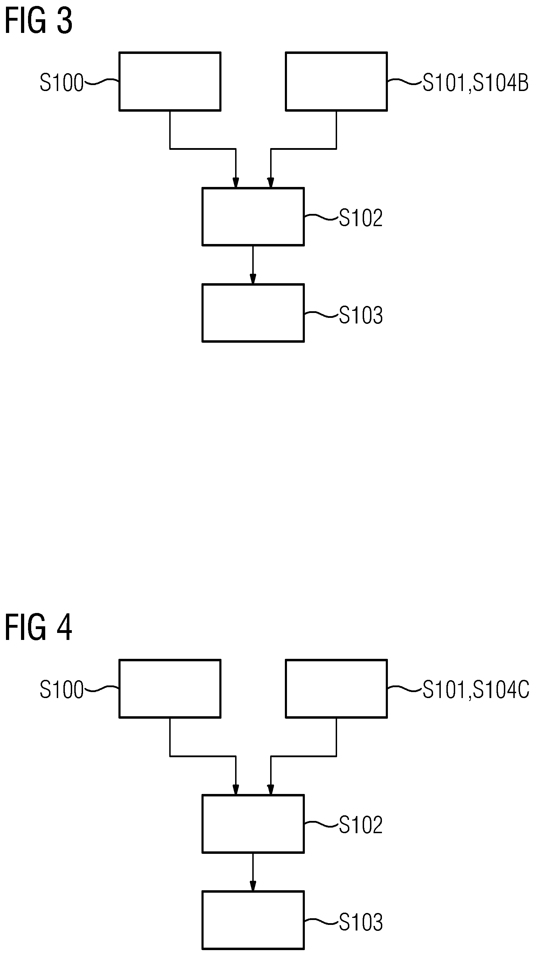

Fig. 3 zeigt eine zweite Weiterbildung des Verfahrens gemäß Fig. 1 in einem Flussdiagramm. Zusätzlich zu den Verfahrensschritten S100 bis S103 kennzeichnet Verfahrensschritt S104B, dass der Brennfleck-Röntgendetektor-Abstand und/oder der Abstand zwischen dem Brennfleck und dem Untersuchungsobjekt automatisch in Abhängigkeit eines die im Brennfleck generierte Röntgenstrahlung vorgebenden Sequenzparameters abgerufen wird.

Fig. 4 zeigt eine dritte Weiterbildung des Verfahrens gemäß Fig. 1 in einem Flussdiagramm. Zusätzlich zu den Verfahrensschritten S100 bis S103 kennzeichnet Verfahrensschritt S104C, dass der Brennfleck-Röntgendetektor-Abstand und/oder der Abstand zwischen dem Brennfleck und dem Untersuchungsobjekt automatisch durch Auswertung der Durchleuchtungsdaten ermittelt wird.

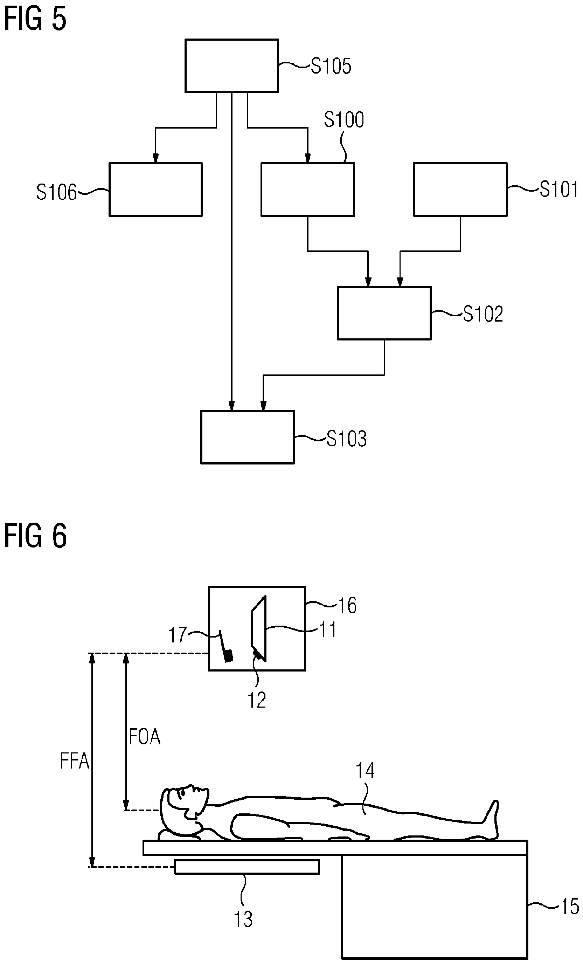

Fig. 5 zeigt das Verfahren gemäß einem weiteren Ausführungsbeispiel in einem Flussdiagramm. Zusätzlich zu den Verfahrensschritten S100 bis S103 kennzeichnet Verfahrensschritt S105, dass die Durchleuchtungsdaten sowie die zweidimensionale Intensitätsverteilung im Rahmen einer bildgebenden Untersuchung des Untersuchungsobjekts erfasst werden.

Als optionaler weiterer Verfahrensschritt S106 ist gezeigt, dass die erfasste zweidimensionale Intensitätsverteilung mit einer Referenz-Intensitätsverteilung verglichen wird und dass in Abhängigkeit einer Abweichung der erfassten zweidimensionalen Intensitätsverteilung von der Referenz-Intensitätsverteilung ein Warnsignal bereitgestellt wird.

Alternativ zu dem in Fig. 5 gezeigten Ausführungsbeispiel kann die Brennfleck-Bildinformation automatisch in Abhängigkeit eines die im Brennfleck generierte Röntgenstrahlung vorgebenden Sequenzparameters abgerufen werden.

Grundsätzlich können die in den Fig. 2 bis 4 gezeigten Weiterbildungen mit den in den Fig. 5 gezeigten Varianten paarweise kombiniert werden.

Fig. 6 zeigt eine Röntgeneinrichtung 10 in einem Blockdiagramm. Die Röntgeneinrichtung 10 weist eine Anode 11 mit einem Brennfleck 12 zur Generierung von Röntgenstrahlung und einen Röntgendetektor 13 zur Erfassung von Durchleuchtungsdaten des Untersuchungsobjekts 14. Das Untersuchungsobjekt 14 ist ein Patient und auf einem Patientenlagerungsvorrichtung 15 gelagert. Die Anode 11 ist Teil eines evakuierten Röntgenstrahlers 16 mit einem Elektronenemitter 17.

Beispielhaft ist in der Fig. 6 ein Brennfleck-Röntgendetektor-Abstand FFA und ein Abstand FOA zwischen dem Brennfleck 12 und dem Untersuchungsobjekt 14 dargestellt. Der Abstand FOA ist bezüglich eines Mittelpunkts des Untersuchungsobjekts 14 dargestellt.

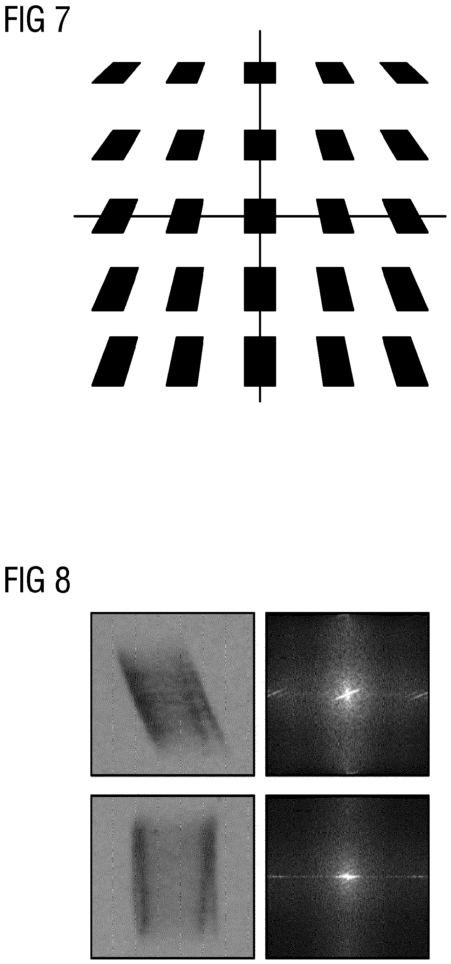

**Fig. 7** zeigt 25 verschiedene beispielhafte Konturen einer zweidimensionalen Intensitätsverteilung.

**Fig. 8** zeigt insgesamt zwei verschiedene Brennflecke in unterschiedlichen Zeilen. In der linken Spalte sind die photographischen Abbildungen im Ortsraum dargestellt und in der rechten Spalte die dazugehörigen Frequenzraum-Abbildungen.

Obwohl die Erfindung im Detail durch die bevorzugten Ausführungsbeispiele näher illustriert und beschrieben wurde, so ist die Erfindung dennoch nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren für ein Rekonstruieren eines Röntgenbildes eines Untersuchungsobjekts, wobei das Untersuchungsobjekt zwischen einem Brennfleck auf einer Anode und einem Röntgendetektor angeordnet ist, aufweisend folgende Schritte:

   - Abrufen einer Brennfleck-Bildinformation, wobei die Brennfleck-Bildinformation eine zweidimensionale Intensitätsverteilung (If) des Brennflecks auf der Anode enthält,
   - Ermitteln als Skalierungsfaktor eines Quotienten von einem Brennfleck-Röntgendetektor-Abstand (FFA) über einem Abstand (FOA) zwischen dem Brennfleck und dem Untersuchungsobjekt,
   - Berechnen einer geometrischen Brennfleckunschärfe (Ug) mittels einer Funktion, wofür die abgerufene Brennfleck-Bildinformation und der ermittelte Skalierungsfaktor Eingangsparameter sind und wobei eine Punktspreizfunktion ein Ausgangsparameter ist, und
   - Rekonstruieren des Röntgenbildes unter Anwendung der Punktspreizfunktion auf Durchleuchtungsdaten, welche das Untersuchungsobjekt gemäß im Brennfleck generierter Röntgenstrahlung abbilden.

2. Verfahren nach Anspruch 1, wobei die Durchleuchtungsdaten sowie der Abstand (FOA) zwischen dem Brennfleck und dem Untersuchungsobjekt und/oder der Brennfleck-Röntgendetektor-Abstand (FFA) im Rahmen einer bildgebenden Untersuchung des Untersuchungsobjekts erfasst werden.

3. Verfahren nach Anspruch 1, wobei der Brennfleck-Röntgendetektor-Abstand (FFA) und/oder der Abstand (FOA) zwischen dem Brennfleck und dem Untersuchungsobjekt automatisch in Abhängigkeit eines die im Brennfleck generierte Röntgenstrahlung vorgebenden Sequenzparameters abgerufen wird.

4. Verfahren nach Anspruch 1, wobei der Brennfleck-Röntgendetektor-Abstand (FFA) und/oder der Abstand (FOA) zwischen dem Brennfleck und dem Untersuchungsobjekt automatisch durch Auswertung der Durchleuchtungsdaten ermittelt wird.

5. Verfahren nach einem der vorhergehenden Ansprüche, wobei die Durchleuchtungsdaten sowie die zweidimensionale Intensitätsverteilung im Rahmen einer bildgebenden Untersuchung des Untersuchungsobjekts erfasst werden.

6. Verfahren nach Anspruch 5, wobei die erfasste zweidimensionale Intensitätsverteilung mit einer Referenz-Intensitätsverteilung verglichen wird und wobei in Abhängigkeit einer Abweichung der erfassten zweidimensionalen Intensitätsverteilung von der Referenz-Intensitätsverteilung ein Warnsignal bereitgestellt wird.

7. Verfahren nach einem der Ansprüche 1 bis 4, wobei die Brennfleck-Bildinformation automatisch in Abhängigkeit eines die im Brennfleck generierte Röntgenstrahlung vorgebenden Sequenzparameters abgerufen wird.

8. Verfahren nach einem der vorhergehenden Ansprüche, wobei das Röntgenbild des Untersuchungsobjekts auf einer Anzeigeeinheit und/oder in einer Speichereinheit bereitgestellt wird.

9. Röntgeneinrichtung (10), aufweisend

   - eine Anode (11) mit einem Brennfleck (12) zur Generierung von Röntgenstrahlung und
   - einen Röntgendetektor (13) zur Erfassung von Durchleuchtungsdaten eines Untersuchungsobjekts (14), wobei die Röntgeneinrichtung (10) zur Durchführung eines Verfahrens nach einem der vorhergehenden Ansprüche ausgebildet ist.

10. Computerprogrammprodukt, welches direkt in einen Speicher einer Recheneinheit ladbar ist, mit Programmcodemitteln, um ein Verfahren nach einem der Ansprüche 1 bis 8 auszuführen, wenn das Computerprogrammprodukt in der Recheneinheit ausgeführt wird.

## FIG 1

S100

S101

S102

S103

## FIG 2

S104A

S101

S100

S102

S103

## FIG 3

S100 — [ ]   [ ] — S101,S104B

S102

S103

## FIG 4

S100 — [ ]   [ ] — S101,S104C

S102

S103

## FIG 5

## FIG 6

FIG 7

FIG 8

Europäisches
Patentamt

European
Patent Office

Office européen
des brevets

## EUROPÄISCHER RECHERCHENBERICHT

Nummer der Anmeldung

EP 20 21 0306

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/047156 A1 (RUDIN STEPHEN [US] ET AL) 15. Februar 2018 (2018-02-15) <br> * Abbildungen 1, 2, 3, 7, 8, 9, 12 * <br> * Absatz [0024] * <br> * Absatz [0035] - Absatz [0038] * <br> * Absatz [0055] - Absatz [0058] * <br> ----- | 1-10 | INV. <br> G06T11/00 <br> G06T5/00 |
| A | JAN KUNTZ ET AL: "Focal spot deconvolution using convolutional neural networks", <br> MEDICAL IMAGING 2019: PHYSICS OF MEDICAL IMAGING, <br> März 2019 (2019-03), Seite 25, <br> XP055746391, <br> DOI: 10.1117/12.2513400 <br> ISBN: 978-1-5106-2544-0 <br> * das ganze Dokument * <br> ----- | 1-10 | |

RECHERCHIERTE
SACHGEBIETE (IPC)

G06T

Der vorliegende Recherchenbericht wurde für alle Patentansprüche erstellt

| Recherchenort | Abschlußdatum der Recherche | Prüfer |
|---|---|---|
| München | 6. April 2021 | Werling, Alexander |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 0306

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-04-2021

| Im Recherchenbericht angeführtes Patentdokument | Datum der Veröffentlichung | Mitglied(er) der Patentfamilie | Datum der Veröffentlichung |
|---|---|---|---|
| US 2018047156 A1 | 15-02-2018 | KEINE | |

EPO FORM P0461

Für nähere Einzelheiten zu diesem Anhang : siehe Amtsblatt des Europäischen Patentamts, Nr.12/82